# EUROPEAN PATENT SPECIFICATION

(11) **EP 3 223 462 B1**
(45) Date of publication and mention of the grant of the patent: **01.04.2020**
(21) Application number: 14906477.6
(22) Date of filing: 19.11.2014
(51) Int. Cl.: H04L 12/28, H04L 29/12

(54) **IP ADDRESS DELIVERY APPARATUS, IP ADDRESS DELIVERY SYSTEM, AND IP ADDRESS DELIVERY METHOD**
VORRICHTUNG ZUR AUSGABE VON IP-ADRESSEN, SYSTEM ZUR AUSGABE VON IP-ADRESSEN UND VERFAHREN ZUR AUSGABE VON IP-ADRESSEN
APPAREIL DE DISTRIBUTION D'ADRESSES IP, SYSTÈME DE DISTRIBUTION D'ADRESSES IP ET PROCÉDÉ DE DISTRIBUTION D'ADRESSES IP

(43) Date of publication of application: 27.09.2017
(73) Proprietor: Mitsubishi Electric Corporation, Chiyoda-ku Tokyo 100-8310 (JP)
(72) Inventor: MORIMOTO, Kazunari, Tokyo 100-8310 (JP)
(74) Representative: Witte, Weller & Partner Patentanwälte mbB
(86) International application number: PCT/JP2014/080646
(87) International publication number: WO 2016/079824

(56) References cited:
- EP-A1- 2 763 351
- WO-A1-2013/046304
- WO-A1-2013/105219
- WO-A1-2014/142258
- Daniel Feenberg: "Revoke a DHCP lease early?", , 9 March 2013 (2013-03-09), XP055467463, Retrieved from the Internet: URL:https://lists.freebsd.org/pipermail/fr eebsd-questions/2013-March/249683.html [retrieved on 2018-04-16]
- DROMS BUCKNELL UNIVERSITY R: "Dynamic Host Configuration Protocol; rfc2131.txt", DYNAMIC HOST CONFIGURATION PROTOCOL; RFC2131.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 March 1997 (1997-03-01), XP015007915,
- Daniel Feenberg: "Revoke a DHCP lease early?", , 16 April 2014 (2014-04-16), XP055556545, Retrieved from the Internet: URL:https://web.archive.org/web/2014041601 3631/https://lists.freebsd.org/pipermail/f reebsd-questions/2013-March/249683.html [retrieved on 2019-02-14]

## Description

### Field

The present invention relates to an IP address distribution device, an IP address distribution system, and an IP address distribution method for distributing IP addresses to devices in a train.

### Background

It is believed that network systems based on the Ethernet (registered trademark) standard will become the international standard for communication between devices mounted in railroad vehicles. The Ethernet (registered trademark) is already commonly being used mainly in Europe and North America for communication between devices mounted in railroad vehicles.

A typical communication protocol on the Ethernet (registered trademark) is the TCP/IP. With the TCP/IP, IP addresses are used as information for identifying devices, with an IP address being uniquely assigned to each device.

Various systems have been proposed and used as a system for distributing IP addresses in offices or on home LANs, examples of which include a system for distributing IP addresses by utilizing a dynamic host configuration protocol (DHCP), a system for determining IP addresses to be distributed to respective ports of a switching hub, and a system for manually setting IP addresses one by one.

Patent Literature 1 describes an IP address distribution device that distributes IP addresses to terminal devices in a train formation. The IP addresses are determined on the basis of the routing information from the IP address distribution device to the terminal devices

Document EP2763351 discloses an address assignment server assigning IP addresses based on arrangement information added by intermediate switches.

### Citation List

### Patent Literature

Patent Literature 1: Japanese Patent No. 4790088

### Summary

### Technical Problem

The IP addresses to be assigned to devices mounted in the train are fixed and given in accordance with the arrangement of the devices in the train, with the IP addresses being managed as IDs unique to the devices. The reason why IP addresses are fixed and assigned in the train is that, in a case where a device malfunctions and communication errors occur, the faulty device can be immediately identified using the IP address and then promptly replaced. Another reason is that, in a case where an event occurs in a certain device, it is possible to immediately identify, using the IP address, the car in which the device in which an event has occurred is located and the location of the device in the car.

However, with the method for distributing IP addresses by utilizing the DHCP, the same IP address is not always assigned to the same device when IP addresses are reset. For example, a media access control (MAC) address for the device needs to be specified in order to assign the same IP address to the same device, which requires a complicated process.

With the IP address distribution method described in Patent Literature 1, a specific function needs to be provided in a switch arranged on the communication route.

The present invention has been made in view of the above, and an object thereof is to provide an IP address distribution device, an IP address distribution system, and an IP address distribution method capable of assigning a fixed IP address to a device in a train more easily.

### Solution to Problem

In order to solve the above problems and achieve the object, an IP address distribution system according to an aspect of the present invention includes: a plurality of devices connected to a communication network established in a train; and an IP address distribution device to select, in response to a request from a device, a fixed IP address to be assigned to a requesting device and to transmit the IP address to the requesting device, the IP address distribution device being connected to the communication network. The IP address distribution device includes: a display; a storage to store an IP address management table in which an IP address and an in-train installation position of a device in which the IP address needs to be used are managed in one-to-one correspondence with each other and which includes information as to whether the IP address is in use or not in use; and an IP address distribution unit to refer to the IP address management table in response to receiving a request for an IP address from the requesting device, display, on the display, unused IP addresses in one-to-one correspondence with the in-train installation positions, accept input information for selecting, from among the unused IP addresses displayed on the display, an IP address corresponding to an in-train installation position of the requesting device, and select, from the IP address management table, an IP address to be assigned to the requesting device on a basis of the input information.

### Advantageous Effects of Invention

The present invention achieves an effect of being capable of assigning a fixed IP address to a device in a train more easily.

### Brief Description of Drawings

FIG. 1 is a diagram illustrating an exemplary overall configuration of a train in a first embodiment.
FIG. 2 is a diagram illustrating an exemplary configuration of an IP address distribution system according to the first embodiment.
FIG. 3 is a block diagram illustrating an exemplary functional configuration of a device of the first embodiment.
FIG. 4 is a block diagram illustrating an exemplary functional configuration of an IP address distribution device according to the first embodiment.
FIG. 5 is a diagram illustrating an example of an IP address management table.
FIG. 6 is a flowchart illustrating an IP address acquisition operation of a device that includes an input unit.
FIG. 7 is a flowchart illustrating an IP address distribution operation of the IP address distribution device.
FIG. 8 is a diagram illustrating an exemplary display of a list of unused IP addresses.
FIG. 9 is a sequence diagram for setting an IP address when the communication process used in the DHCP is used.
FIG. 10 is a block diagram illustrating a functional configuration of an IP address distribution device according to a modification of the first embodiment.
FIG. 11 is a flowchart illustrating the IP address acquisition operation of a device 2 that does not include the input unit.
FIG. 12 is a block diagram illustrating an exemplary functional configuration of an IP address distribution device according to a second embodiment.
FIG. 13 is a block diagram illustrating an exemplary functional configuration of an IP address distribution device according to a third embodiment.

### Description of Embodiments

Hereinafter, an IP address distribution device, an IP address distribution system, and an IP address distribution method according to embodiments of the present invention will be described in detail with reference to the drawings. The present invention is not limited to the embodiments.

### First Embodiment.

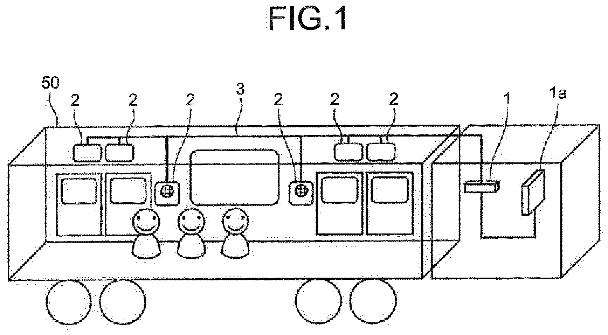

FIG. 1 is a diagram illustrating an exemplary overall configuration of a train in the present embodiment. An exemplary arrangement configuration of devices 2 in a vehicle 50 of a train formation is illustrated in FIG. 1. As illustrated in FIG. 1, the devices 2, an IP address distribution device 1, and a display 1a are provided in the vehicle 50. The IP address distribution device 1 can distribute an IP address to each of the devices 2. The display 1a can display data managed by the IP address distribution device 1. The devices 2, the IP address distribution device 1, and the display 1a are connected to a communication network 3. The communication network 3 as used herein is a network established in the train. An Ethernet (registered trademark) cable and a communication device (not illustrated) having a relay function are combined to establish the communication network 3.

Although the devices 2 are denoted by the same reference sign, the same type and different types of devices are generally included in the devices 2. Although the six devices 2 are provided in FIG. 1 as an example, the number of installed devices 2 is not limited to the example in the drawing. Furthermore, although only the vehicle 50 is illustrated in the example in the drawing, a case where a plurality of vehicles constitute the formation is also described in a similar manner, and a group of devices mounted in each of the vehicles is connected to the communication network 3.

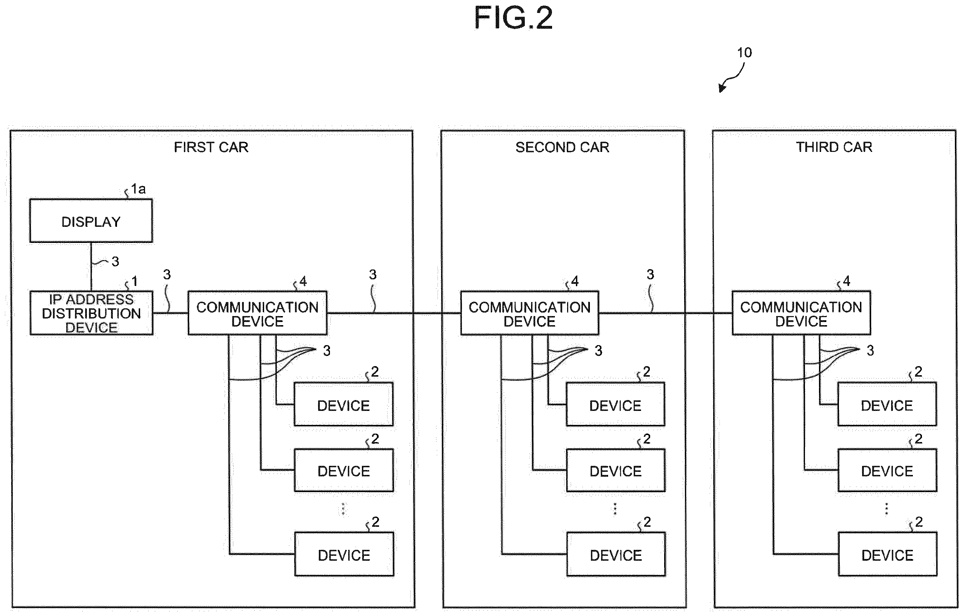

FIG. 2 is a diagram illustrating an exemplary configuration of an IP address distribution system 10 according to the present embodiment. As illustrated in FIG. 2, the IP address distribution device 1, the display 1a, a communication device 4, and the devices 2 are mounted in a first car, the communication device 4 and the devices 2 are mounted in a second car, and the communication device 4 and the devices 2 are mounted in a third car. The display 1a, the IP address distribution device 1, the communication devices 4 in the respective vehicles, and the respective devices 2 in the respective vehicles are connected to the communication network 3. Although three cars constitute the formation in FIG. 2, the formation is not limited to this example.

The device 2 only needs to be a device including a communication function. Examples of the device 2 include a camera that monitors the inside of the vehicle, an emergency reporting device for allowing passengers to report an emergency to the train crew, a guidance indicator that displays operation information to passengers, a train information management device, and various control devices.

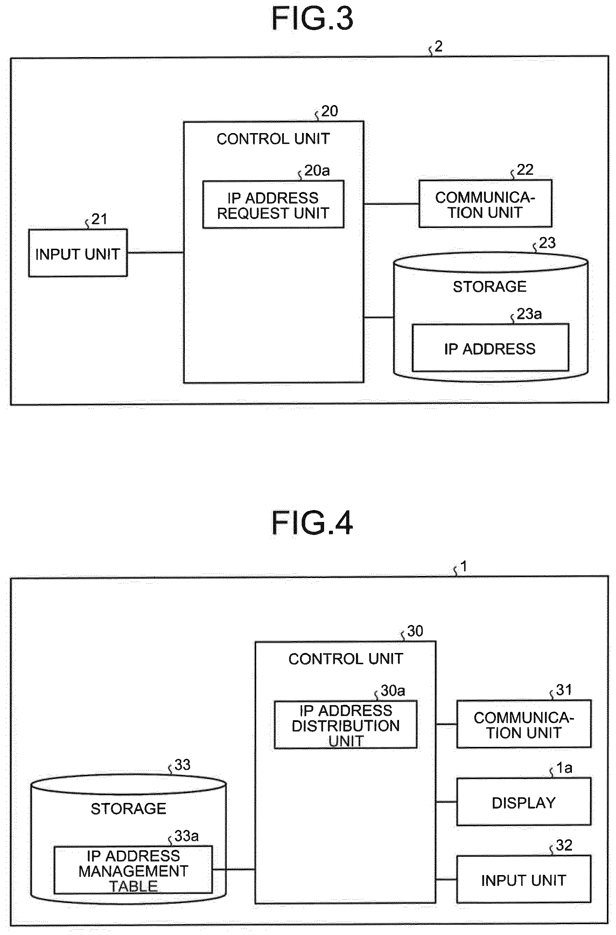

FIG. 3 is a block diagram illustrating an exemplary functional configuration of the device 2 of the present embodiment. The devices 2 include an input unit 21, a communication unit 22, a storage 23, and a control unit 20. The input unit 21 enables an external input due to the operation from an external source. The communication unit 22 performs communication. The storage 23 stores data including an IP address 23a. The control unit 20 is connected to the input unit 21, the communication unit 22, and the storage 23.

The input unit 21 is, for example, an operation button provided on the device 2. A certain device 2, such as a camera for monitoring the inside of the vehicle, might not be equipped with the input unit 21.

The IP address 23a is stored in the storage 23 in FIG. 3, which means that the IP address 23a is set for the device 2. In contrast, in a case where an IP address is not set for the device 2, the IP address is not stored in the storage 23.

The control unit 20 includes an IP address request unit 20a that generates an IP address request signal for requesting an IP address. The IP address request unit 20a generates the IP address request signal at the time of the initial setting or resetting of the IP address, and sends the IP address request signal to the communication network 3. The IP address request unit 20a also receives an IP address transmitted from the IP address distribution device 1, saves the IP address in the storage 23, and sets the IP address as a communication address of the device 2.

FIG. 4 is a block diagram illustrating an exemplary functional configuration of the IP address distribution device 1 according to the present embodiment. The IP address distribution device 1 includes a communication unit 31, an input unit 32, a storage 33, the above-mentioned display 1a, and a control unit 30. The communication unit 31 includes a communication function. The input unit 32 accepts input from an external source. The storage 33 stores data including an IP address management table 33a. The control unit 30 is connected to the communication unit 31, the input unit 32, the storage 33, and the display 1a.

The IP address management table 33a manages, in association with each other, IP addresses and the in-train installation positions of the devices in which the IP addresses should be used. In other words, in the IP address management table 33a, IP addresses are managed in association with the in-train installation positions of the devices 2 in which the IP addresses should be used.

The IP address management table 33a also includes information as to whether IP addresses are in use or not in use. A used IP address means an IP address that has already been sent to the device 2 and used in the device 2 to which the IP address has been sent, and an unused IP address means an IP address that has not been sent to and used by any of the devices 2 yet.

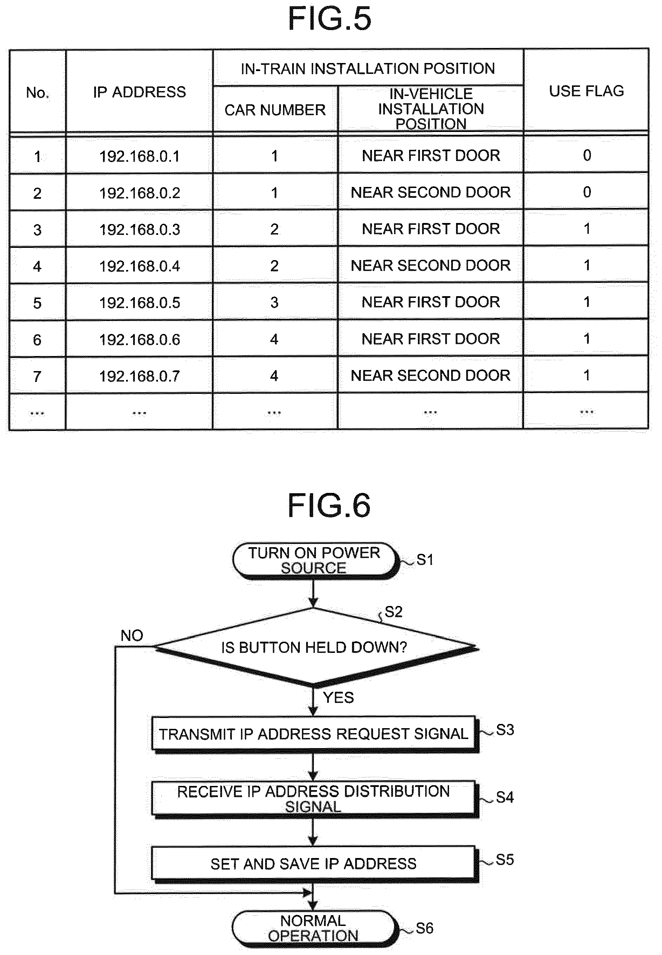

FIG. 5 is a diagram illustrating an example of the IP address management table 33a. As illustrated in FIG. 5, IP addresses are managed in association with the in-train installation positions in the IP address management table 33a. The in-train installation position as used herein is provided as a combination of a car number and an in-vehicle installation position of the device in the vehicle represented by the car number. An item "use flag" is provided in the IP address management table 33a. The use flag "0" represents an unused IP address, and the use flag "1" represents a used IP address. For example, the IP address "192.168.0.1" is an unused IP address and is associated with the in-train installation position designated by the combination of the car number "1" and the in-vehicle installation position "near first door". This IP address is to be given to the device 2 installed near the "first door" in the "first" car. The method of designating the in-train installation position is not limited to the example in the drawing, and it only needs to be able to distinguish the installation position.

An IP address distribution unit 30a refers to the IP address management table 33a in response to accepting a request for an IP address from the device 2, and displays, on the display 1a, unused IP addresses in association with the in-train installation positions. The IP address distribution unit 30a can also accept input information for selecting, from among the unused IP addresses displayed in the display 1a, the IP address corresponding to the in-train installation position of the requesting device 2. Then, the IP address distribution unit 30a selects, from the IP address management table 33a, the IP address to be assigned to the requesting device 2 on the basis of the input information, and transmits the IP address to the requesting device 2.

The display 1a includes, for example, a touch panel as an input unit. The user can operate the touch panel to input the input information for selecting, from among the unused IP addresses displayed on the display 1a, the IP address corresponding to the in-train installation position of the requesting device 2. The input unit 32 illustrated in FIG. 4 represents not only the input unit provided in the IP address distribution device 1 itself but also the touch panel provided in the display 1a. Although the display 1a is provided separately from the IP address distribution device 1 in FIG. 1, the display 1a may be configured to be provided integrally with the IP address distribution device 1.

Next, operations of the present embodiment will be described. In the present embodiment, a case where the device 2 includes the input unit 21 will be described. The input unit 21 is, for example, a button.

FIG. 6 is a flowchart illustrating an IP address acquisition operation of the device 2 that includes the input unit 21. The operation of the device 2 at the time of the initial setting or resetting of an IP address is illustrated in FIG. 6.

As illustrated in FIG. 6, when a power source is turned on (S1), the IP address request unit 20a determines whether the button is held down (S2). More specifically, the IP address request unit 20a determines whether the power source is turned on while the button is pressed. The power source as used herein is, for example, a power source for the entire train.

As a result of the determination in S2, in a case where the button is not held down when the power source is turned on (S2, No), the device 2 proceeds to operations other than the IP address acquisition operation, i.e., normal operations. As a result of the determination in S2, in a case where the button is held down when the power source is turned on (S2, Yes), the IP address request unit 20a proceeds to the IP address acquisition operation in S3 and the subsequent steps.

In this manner, in a case where the button is held down when the power source is turned on, pressing the button triggers an IP address setting process. Generally, in a case where the input unit 21 has been operated when the power source is turned on, the IP address request unit 20a starts the IP address acquisition process regardless of whether the IP address is set or not.

Next, in a case where the button is held down when the power source is turned on (S2, Yes), the IP address request unit 20a generates the IP address request signal for requesting an IP address and sends the IP address request signal to the communication network 3 (S3). The IP address request signal is broadcasted using a broadcast address as a transmission destination address. A transmission source address is the MAC address of the device 2.

Next, in response to receiving an IP address distribution signal from the IP address distribution device 1 (S4), the IP address request unit 20a saves, in the storage 23, the IP address included in the IP address distribution signal and performs the initial setting or resetting of the IP address (S5). After that, the device 2 proceeds to normal operations (S6). The IP address distribution signal will be described below.

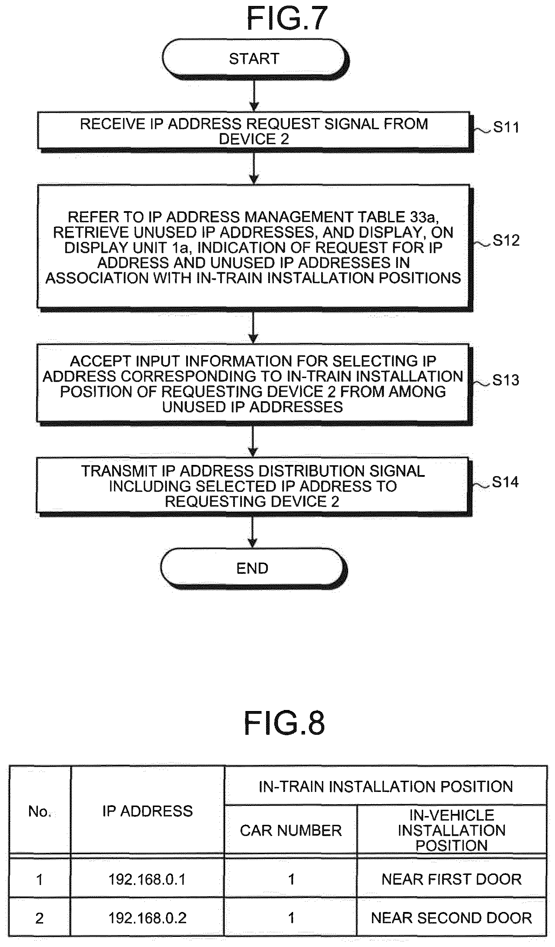

FIG. 7 is a flowchart illustrating the IP address distribution operation of the IP address distribution device 1. The processes illustrated in the flowchart in FIG. 7 are performed between the process of S3 and the process of S4 in FIG. 6.

First, as illustrated in FIG. 7, the IP address distribution unit 30a receives the IP address request signal from the device 2 that is the source of the request for an IP address (S11).

Next, the IP address distribution unit 30a refers to the IP address management table 33a stored in the storage 33, retrieves unused IP addresses, and displays, on the display 1a, an indication of the request for the IP address and the unused IP addresses in association with the in-train installation positions (S12).

An exemplary display of a list of unused IP addresses is illustrated in FIG. 8. The unused IP addresses are for assigning to the devices 2 installed at the in-train installation positions associated with the IP addresses. It is assumed that the unset IP addresses associated with the in-train installation positions of the devices 2 to which the IP addresses are to be set are registered with the IP address management table 33a in advance. Not only unused IP addresses but also used IP addresses may be displayed together on the display 1a. For example, the IP address management table 33a in FIG. 5 can be displayed on the display 1a. In this case, unused IP addresses and used IP addresses are displayed, for example, in different colors, whereby they can be easily identified.

Next, the IP address distribution unit 30a accepts the input information for selecting, from among the unused IP addresses displayed on the display 1a, the IP address corresponding to the in-train installation position of the requesting device 2 (S13). Because the user knows the in-train installation position of the requesting device 2 in advance, for example, the user operates the touch panel on the display screen and selects the IP address corresponding to the in-train installation position of the requesting device 2 from the list of unused IP addresses displayed on the display 1a, whereby the input information for selecting the IP address can be input to the IP address distribution unit 30a. As mentioned above, this process is based on the premise that the in-train installation position of the requesting device 2 is known in advance.

The IP address distribution unit 30a selects, from the IP address management table 33a, the IP address to be assigned to the requesting device 2 on the basis of the input information, and transmits the IP address distribution signal including the selected IP address to the requesting device 2 (S14). The IP address distribution unit 30a registers the fact that the assigned IP address is the used IP address with the IP address management table 33a. For example, the use flag for the IP address is changed from 0 to 1 in the example of FIG. 5.

Even if the IP address distribution unit 30a receives another IP address request signal during the period from the reception of the IP address request signal to the transmission of the IP address distribution signal, the IP address distribution unit 30a discards that IP address request signal. Therefore, when the indication of the request for the IP address is displayed on the display 1a, the single device 2 serves as a source of a request, and the IP address corresponding to the in-train installation position of the requesting device 2 can be uniquely selected from among the unused IP addresses.

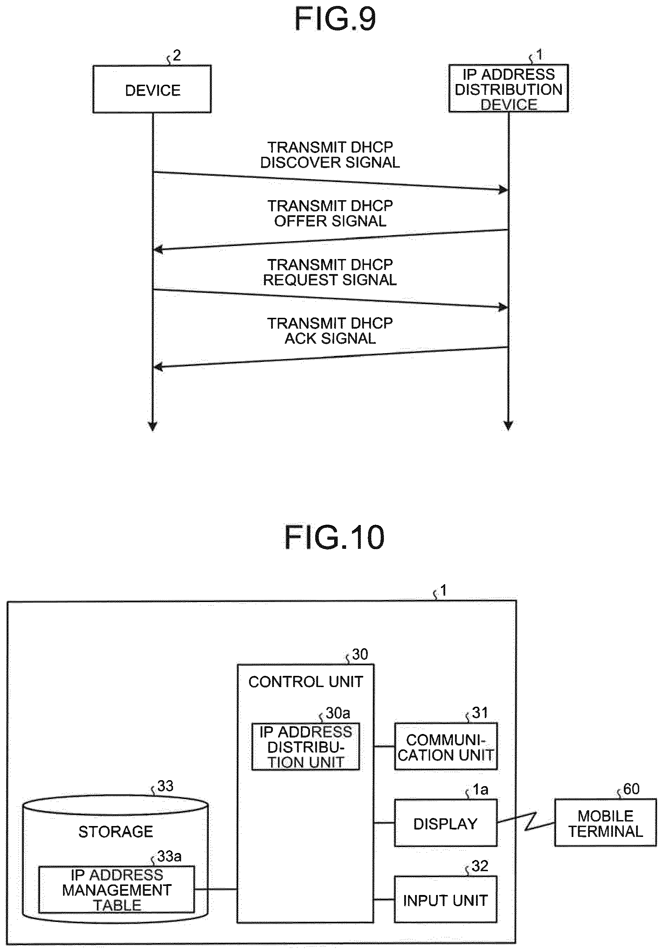

A communication process used in the DHCP can be used for a communication process between the device 2 and the IP address distribution device 1. FIG. 9 is a sequence diagram for setting an IP address when the communication process used in the DHCP is used. The processing entity of the device 2 for the process in FIG. 9 is the IP address request unit 20a, and the processing entity of the IP address distribution device 1 is the IP address distribution unit 30a.

First, as illustrated in FIG. 9, the device 2 sequentially performs the processes of S1 and S2 in FIG. 6, and broadcasts a DHCP DISCOVER signal as the IP address request signal in a case where the button is held down when the power source is turned on (S2 in FIG. 6, Yes). Next, the IP address distribution device 1 sequentially performs the processes of S12 to S13 in FIG. 7 in response to receiving the DHCP DISCOVER signal from the communication network 3, and transmits a DHCP OFFER signal as the IP address distribution signal to the device 2. The IP address selected in S13 in FIG. 7 is included in the DHCP OFFER signal. Next, the device 2 broadcasts a DHCP REQUEST signal in order to notify the IP address distribution device 1 that the IP address transmitted from the IP address distribution device 1 is to be used. Then, the IP address distribution device 1 transmits, to the device 2, a DHCP ACK (acknowledgement) signal for acknowledging the use of the IP address in response to receiving the DHCP REQUEST signal, and registers, with the IP address management table 33a, the fact that the IP address assigned to the device 2 has already been used.

As described above, according to the present embodiment, the IP address distribution unit 30a refers to the IP address management table 33a in response to receiving the request for an IP address from the requesting device 2, and displays, on the display 1a, unused IP addresses in association with the in-train installation positions. The IP address distribution unit 30a then accepts the input information for selecting, from among the unused IP addresses displayed on the display 1a, the IP address corresponding to the in-train installation position of the requesting device 2, and selects, from the IP address management table 33a, the IP address to be assigned to the requesting device 2 on the basis of the input information. Therefore, the fixed IP address can be assigned to the requesting device 2 without giving any special function to the communication device 4, which is a relay device on the communication network 3.

Thus, because a special function does not need to be given to the communication device 4, the present embodiment can be configured using a general-purpose network device or can be used in a railroad vehicle configured using a combination of devices made by various manufacturers, and the fixed IP addresses can be assigned to the devices in the train more easily.

FIG. 10 is a block diagram illustrating a functional configuration of the IP address distribution device 1 according to a modification of the present embodiment. In the IP address distribution device 1 according to the present modification, the display 1a includes a wireless communication function with which it can wirelessly communicate with a mobile terminal 60 carried by the user. The mobile terminal 60 is a smartphone, a tablet, or the like, and includes a wireless communication function. The rest of the configuration of the IP address distribution device 1 according to the present modification is the same as that in FIG. 4, and components in FIG. 10 that are the same as the components illustrated in FIG. 4 are denoted by the same reference signs.

The user operates the mobile terminal 60, whereby the mobile terminal 60 and the display 1a can wirelessly communicate with each other. The display 1a transmits the display content of the display 1a to the mobile terminal 60 by wireless communication with the mobile terminal 60. The mobile terminal 60 can display the display content transmitted from the display 1a on a display (not illustrated) of the mobile terminal 60. More specifically, the display 1a transmits, to the mobile terminal 60, the display content that is unused IP addresses displayed in association with the in-train installation positions, and the mobile terminal 60 displays the display content transmitted from the display 1a on the display (not illustrated) of the mobile terminal 60.

Next, the mobile terminal 60 accepts input information for selecting, from among the unused IP addresses displayed on the display (not illustrated) of the mobile terminal 60, the IP address corresponding to the in-train installation position of the requesting device 2. The mobile terminal 60 then transmits the input information to the display 1a. The IP address distribution unit 30a accepts, via the display la, the input information transmitted from the mobile terminal 60.

The effects of the present modification are as follows. The display 1a is typically installed in the cab. In this case, when the device 2 is apart from the cab, the user carrying the mobile terminal 60 can operate the device 2 and perform the inputting process on the IP address distribution unit 30a at the in-train installation position of the device 2, whereby work performance is improved.

In addition, because the user can perform the input process on the IP address distribution unit 30a at the in-train installation position of the device 2, the in-train installation position of the device 2 can be obtained more readily, and the selection of the IP address corresponding to the in-train installation position of the device 2 from among the unused IP addresses displayed on the display (not illustrated) of the mobile terminal 60 is facilitated.

### Second Embodiment.

The first embodiment has described the case where the device 2 includes the input unit 21. In the present embodiment, a case where the device 2 does not include the input unit 21 will be described. Because the configuration of the device 2 is the same as that in FIG. 3 except that the input unit 21 has been removed, an illustration of the configuration is omitted.

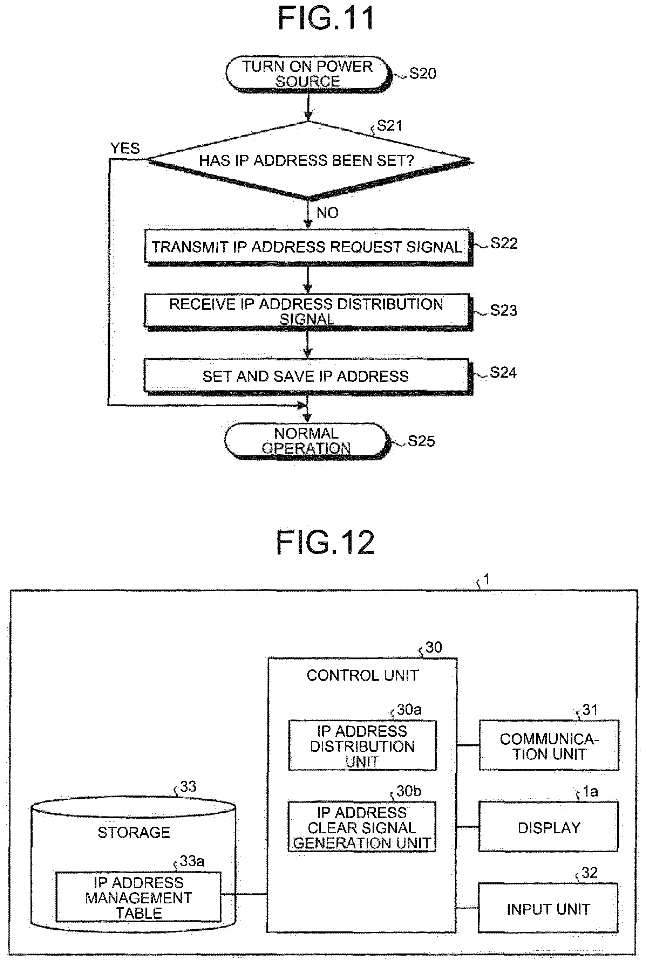

FIG. 11 is a flowchart illustrating the IP address acquisition operation of the device 2 that does not include the input unit. The operation of the device 2 at the time of the initial setting of an IP address is illustrated in FIG. 11.

As illustrated in FIG. 11, when the power source is turned on (S20), the IP address request unit 20a determines whether an IP address has already been set (S21). The power source as used herein is, for example, a power source for the entire train.

As a result of the determination in S21, in a case where an IP address has already been set when the power source is turned on (S21, Yes), the device 2 proceeds to operations other than the IP address acquisition operation, i.e., normal operations. As a result of the determination in S21, in a case where an IP address has not been set yet when the power source is turned on (S21, No), the IP address request unit 20a proceeds to the IP address acquisition operation in S22 and the subsequent steps.

Next, in a case where an IP address has not been set yet when the power source is turned on, the IP address request unit 20a generates the IP address request signal for requesting an IP address and sends the IP address request signal to the communication network 3 (S22). The IP address request signal is broadcasted using a broadcast address as a transmission destination address. The transmission source address is the MAC address of the device 2.

Next, in response to receiving the IP address distribution signal from the IP address distribution device 1 (S23), the IP address request unit 20a saves, in the storage 23, the IP address included in the IP address distribution signal and performs the initial setting of the IP address (S24). After that, the device 2 proceeds to normal operations (S25). This is the end of the operation of the device 2 at the time of the initial setting of the IP address.

Next, the operation at the time of the resetting of the IP address will be described. In a case where the device 2 does not include the input unit, such as a button does, the IP address resetting process by the pressing of a button or the like cannot be performed. In the present embodiment, therefore, an IP address clear signal for causing the device 2 to erase the IP address is transmitted from the IP address distribution device 1, and the device 2 temporarily enters the state of initial setting of the IP address. After that, the IP address setting process is performed in accordance with the processes in FIG. 11. Hereinafter, the details will be described.

FIG. 12 is a block diagram illustrating an exemplary functional configuration of the IP address distribution device according to the present embodiment. It is different from that of FIG. 4 in that an IP address clear signal generation unit 30b is provided in the control unit 30.

First, the user operates, for example, the touch panel of the display 1a and causes the display 1a to display a display screen for the resetting of the IP address. On the display screen, the used IP addresses managed by the IP address management table 33a are displayed in association with the in-train installation positions. The IP address management table 33a may be displayed on the display 1a.

Next, the user operates the touch panel to select, from among the used IP addresses displayed on the display 1a, the IP address corresponding to the in-train installation position of the device 2 that is a target for the resetting of the IP address. Consequently, input information for selecting the IP address is input to the IP address distribution device 1.

Next, the IP address clear signal generation unit 30b accepts the input information and generates the IP address clear signal for causing the device 2 to which the IP address is assigned to execute a clearing process on the IP address. The IP address clear signal generation unit 30b then transmits the IP address clear signal to the device 2 using the IP address as the transmission destination address. Subsequent processes are the same as those described using FIG. 11.

As mentioned above, according to the present embodiment, both the initial setting and resetting processes for the IP address can be performed even when the device 2 does not include the input unit 21. The configuration, operation, and effect of the present embodiment other than those described above are the same as those in the first embodiment.

The present embodiment can also be used in a case where the device 2 includes the input unit 21. Specifically, in a case where the device 2 includes the input unit 21, the processes in FIG. 11 may be performed instead of performing the processes in FIG. 6, and the IP address clear signal generation unit 30b may be provided in the IP address distribution device 1.

In addition, as in the modification of the first embodiment, the IP address setting process may be performed via a mobile terminal in such a manner that the wireless communication function is provided in the display 1a of the present embodiment and the mobile terminal and the display 1a are connected to each other so as to be capable of performing wireless communication.

### Third Embodiment.

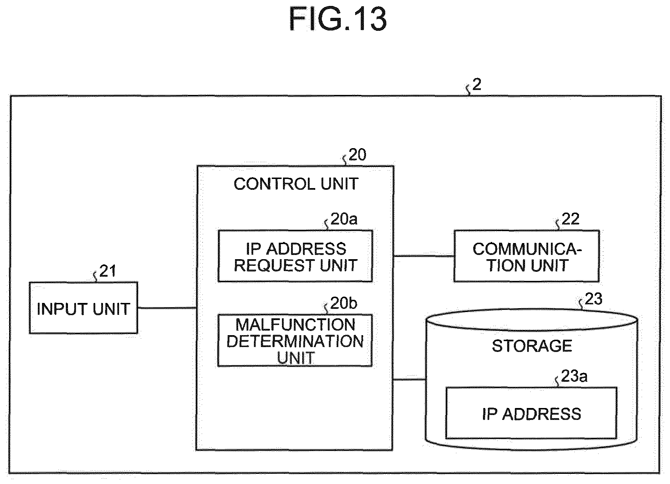

FIG. 13 is a block diagram illustrating an exemplary functional configuration of the IP address distribution device according to a third embodiment. As illustrated in FIG. 13, a malfunction determination unit 20b is provided in the control unit 20 of the device 2. The rest of the configuration of the device 2 is the same as that in FIG. 3. Although the device 2 includes the input unit 21 in FIG. 13, the present embodiment can also be used in a case where the device 2 does not include the input unit 21. The rest of configuration of the present embodiment is the same as that of the first embodiment.

The malfunction determination unit 20b determines whether a malfunction has occurred in a part of the device 2 and transmits malfunction information on the device 2 to the IP address distribution device 1 when a malfunction has occurred.

The IP address distribution device 1, or specifically the control unit 20, refers to the IP address management table 33a in response to receiving malfunction information from the device 2, displays, on the display 1a, the IP address of the transmission source and the in-train installation position associated with the IP address, and displays an indication of the occurrence of the malfunction in the device to which the IP address of the transmission source is assigned.

According to the present embodiment, in a case where a malfunction has occurred in the device 2, the IP address distribution device 1 causes the display 1a to display the in-train installation position of the device 2 in which the malfunction has occurred together with the IP address of the device 2. Therefore, the user can immediately recognize the installation place of the device 2 in which the malfunction has occurred. The operation and effect of the present embodiment other than those described above are the same as those of the first and second embodiments.

In a case where the communication unit 22 of the device 2 malfunctions, the IP address distribution device 1 cannot obtain malfunction information from the device 2. In order to deal with this circumstance, signals informing the IP address distribution device 1 that no communication error is occurring can be transmitted from the device 2 at fixed intervals, and whether or not the signals are received at the IP address distribution device 1 at fixed intervals can be monitored. Specifically, when it is determined that the signals are not being received at fixed intervals, the IP address distribution device 1 determines that an error has occurred in the communication with the device 2. Next, the IP address distribution device 1 refers to the IP address management table 33a, displays, on the display 1a, the IP address of the device 2 and the in-train installation position associated with the IP address, and displays an indication of the occurrence of the error in the communication with the device 2 to which the IP address is assigned. Consequently, the user can immediately recognize the installation place of the device 2 in which the communication error has occurred.

### Industrial Applicability

As described above, the present invention is useful as an IP address distribution device, an IP address distribution system, and an IP address distribution method for distributing fixed IP addresses to devices in a train.

### Reference Signs List

1 IP address distribution device, 1a display, 2 device, 3 communication network, 4 communication device, 10 IP address distribution system, 20, 30 control unit, 20a IP address request unit, 20b malfunction determination unit, 21, 32 input unit, 22, 31 communication unit, 23, 33 storage, 23a IP address, 30a IP address distribution unit, 30b IP address clear signal generation unit, 33a IP address management table, 50 vehicle.

## Claims

1. An IP address distribution system (10) comprising:
a plurality of devices (2) connected to a communication network (3) established in a train; and
an IP address distribution device (1) to select, in response to a request from a device (2), a fixed IP address to be assigned to a requesting device (2) and to transmit the IP address to the requesting device (2), the IP address distribution device (1) being connected to the communication network (3), wherein
the IP address distribution device (1) includes:
a display (1a);
an input unit (32) operable by a user;
a storage (33) to store an IP address management table (33a) in which an IP address and an in-train installation position of a device (2) in which the IP address needs to be used are managed in one-to-one correspondence with each other and which includes information as to whether the IP address is in use or not in use, an unset IP address associated with an in-train installation position of a device to which an IP address is to be set being registered in the IP address management table in advance; and
an IP address distribution unit (30a) to refer to the IP address management table (33a) in response to receiving a request for an IP address from the requesting device (2), display, on the display (1a), unused IP addresses in one-to-one correspondence with the in-train installation positions, accept, from the input unit, input information that is input by a user operating the input unit and is used for selecting, from among the unused IP addresses displayed on the display (1a), an IP address corresponding to an in-train installation position of the requesting device (2), and select, from the IP address management table (33a), a fixed IP address to be assigned to the requesting device (2) on a basis of the input information.

2. The IP address distribution system (10) according to claim 1, wherein
the device (2) includes:
an input unit (21) to enable an external input due to an operation; and
an IP address request unit (20a) to send an IP address request signal for requesting an IP address to the communication network (3) in a case where the input unit (21) is in an operated state when a power source of the train is turned on.

3. The IP address distribution system (10) according to claim 1, wherein the device (2) includes an IP address request unit (20a) to send an IP address request signal for requesting an IP address to the communication network (3) in a case where an IP address is not set yet for the device (2) when a power source of the train is turned on.

4. The IP address distribution system (10) according to claim 3, wherein
the IP address distribution device (1) includes an IP address clear signal generation unit (30b) to generate an IP address clear signal for causing a device (2) to which a used IP address is assigned to execute a clearing process on an IP address, and
the IP address clear signal generation unit (30b) transmits the IP address clear signal to a device (2) that is a target for resetting of an IP address.

5. The IP address distribution system (10) according to any one of claims 1 to 4, wherein
the device (2) includes a malfunction determination unit (20b) to determine whether a malfunction occurs in a part of the device (2) and to transmit malfunction information on the device (2) to the IP address distribution device (1) when a malfunction occurs, and
the IP address distribution device (1) refers to the IP address management table (33a) in response to receiving malfunction information from the device (2) and displays, on the display (1a), an IP address of a transmission source and an in-train installation position associated with the IP address.

6. The IP address distribution system (10) according to any one of claims 1 to 4, wherein
the display (1a) includes a wireless communication function,
the display (1a) transmits, to a mobile terminal (60a), display content by wireless communication with the mobile terminal (60a), the display content including unused IP addresses displayed in association with the in-train installation positions,
the mobile terminal (60a) displays the display content transmitted from the display (1a), accepts input information for selecting an IP address corresponding to an in-train installation position of the requesting device (2) from among the unused IP addresses, and transmits the input information to the display (1a), and
the IP address distribution unit (30a) accepts, via the display (1a), the input information transmitted from the mobile terminal (60a).

7. An IP address distribution device (1) that is connected to a communication network (3) established in a train, selects, in response to a request from a device (2) connected to the communication network (3), a fixed IP address to be assigned to a requesting device (2), and transmits the IP address to the requesting device (2), the IP address distribution device (1) comprising:
a display (1a);
an input unit (32) operable by a user;
a storage (33) to store an IP address management table (33a) in which an IP address and an in-train installation position of a device (2) in which the IP address needs to be used are managed in one-to-one correspondence with each other and which includes information as to whether the IP address is in use or not in use, an unset IP address associated with an in-train installation position of a device to which an IP address is to be set being registered in the IP address management table in advance; and
an IP address distribution unit (30a) to refer to the IP address management table (33a) in response to receiving a request for an IP address from the requesting device (2), display, on the display (1a), unused IP addresses in one-to-one correspondence with the in-train installation positions, accept, from the input unit, input information that is input by a user operating the input unit and is used for selecting, from among the unused IP addresses displayed on the display (1a), an IP address corresponding to an in-train installation position of the requesting device (2), and select, from the IP address management table (33a), a fixed IP address to be assigned to the requesting device (2) on a basis of the input information.

8. An IP address distribution method comprising:
a step of sending, by a device (2) connected to a communication network (3) established in a train, an IP address request signal to the communication network (3);
a step of receiving the IP address request signal by an IP address distribution device (1) connected to the communication network (3);
a step of retrieving unused IP addresses by referring to an IP address management table (33a) by the IP address distribution device (1), the IP address management table (33a) managing an IP address and an in-train installation position of a device (2) in which the IP address needs to be used in one-to-one correspondence with each other and including information as to whether the IP address is in use or not in use, an unset IP address associated with an in-train installation position of a device to which an IP address is to be set being registered in the IP address management table in advance;
a step of displaying, by the IP address distribution device (1), retrieved unused IP addresses in one-to-one correspondence with the in-train installation positions on a display (1a);
a step of accepting, by the IP address distribution device (1), input information that is input by a user and is used for selecting, from among the unused IP addresses displayed on the display (1a), an IP address corresponding to an in-train installation position of a device (2) that is a source of a request for an IP address; and
a step of selecting, from the IP address management table (33a), a fixed IP address to be assigned to the requesting device (2) on a basis of the input information and transmitting the IP address to the requesting device (2) by the IP address distribution device (1).

## Patentansprüche

1. IP-Adressenverteilersystem (10), mit:
einer Mehrzahl von Einrichtungen (2), die mit einem Kommunikationsnetzwerk (3) verbunden sind, das in einem Zug errichtet ist; und
einer IP-Adressenverteilungseinrichtung (1) zum Auswählen, in Antwort auf eine Anfrage von einer Einrichtung (2), einer festen IP-Adresse, die einer anfragenden Einrichtung (2) zuzuordnen ist, und zum Übertragen der IP-Adresse zu der anfragenden Einrichtung (2), wobei die IP-Adressenverteilungseinrichtung (1) mit dem Kommunikationsnetzwerk (3) verbunden ist, wobei
die IP-Adressenverteilungseinrichtung (1) aufweist:
eine Anzeige (1a);
eine Eingabeeinheit (32), die durch einen Nutzer betreibbar ist;
einen Speicher (33) zum Speichern einer IP-Adressenmanagementtabelle (33a), in der eine IP-Adresse und eine Im-Zug-Installationsposition einer Einrichtung (2), in der die IP-Adresse genutzt werden muss, in Eins-zu-eins-Verhältnis miteinander gemanagt werden, und die Information aufweist, ob die IP-Adresse in Benutzung ist oder nicht in Benutzung ist, wobei eine nicht festgelegte IP-Adresse, die mit einer Im-Zug-Installationsposition einer Einrichtung zugeordnet ist, zu der eine IP-Adresse festgelegt werden soll, die in der IP-Adressenmanagementtabelle vorher registriert ist; und
eine IP-Adressenverteilungseinheit (30a) zur Bezugnahme auf die IP-Adressenmanagementtabelle (33a) in Antwort auf das Empfangen einer Anfrage für eine IP-Adresse von der Anfrage in der Einrichtung (2), auf der Anzeige (1a), unbenutzter IP-Adressen im Eins-zu-eins-Verhältnis mit der Im-Zug-Installationsposition, zum Annehmen, von der Eingabeeinheit, von Eingabeinformation, die durch einen Nutzer, der die Eingabeeinheit betreibt, ist und genutzt wird zum Auswählen, unter den ungenutzten IP-Adressen, die auf der Anzeige (1a) angezeigt werden, eine IP-Adresse entsprechend einer Im-Zug-Installationsposition der anfragenden Einrichtung (2), und zum Auswählen, von der IP-Adressenmanagementtabelle (33a), einer festen IP-Adresse, die der anfragenden Einrichtung (2) zuzuordnen ist, auf Basis der Eingabeinformation.

2. IP-Adressenverteilungssystem (10) nach Anspruch 1, wobei
die Einrichtung (2) aufweist:
eine Eingabeeinheit (21) zum Ermöglichen einer externen Eingabe aufgrund eines Betriebs; und
eine IP-Adressenanfrageeinheit (20a) zum Senden eines IP-Adressenanfragesignals zum Anfragen einer IP-Adresse zu dem Kommunikationsnetzwerk (3) in einem Fall, wo die Eingabeeinheit (21) in einem Betriebszustand ist, wenn eine Leistungsquelle des Zugs eingeschaltet ist.

3. IP-Adressenverteilungssystem (10) nach Anspruch 1, wobei die Einrichtung (2) eine IP-Adressenanfrageeinheit (20a) aufweist, zum Senden eines IP-Adressenanfragesignals zum Anfragen einer IP-Adresse an das Kommunikationsnetzwerk (3) in einem Fall, wo eine IP-Adresse noch nicht für die Einrichtung (2) festgesetzt ist, wenn eine Leistungsquelle des Zugs eingeschaltet wird.

4. IP-Adressenverteilungssystem (10) nach Anspruch 3, wobei
das IP-Adressenverteilungssystem (1) eine IP-Adressenaufräumsignalerzeugungseinheit (30b) aufweist zum Erzeugen eines IP-Adressenaufräumsignals und Bewirken, dass eine Einrichtung (2), der eine benutzte IP-Adresse zugeordnet ist, ein Aufräumprozess an einer IP-Adresse ausführt, und
die IP-Adressenaufräumsignalerzeugungseinheit (30b) das IP-Adressenaufräumsignal an eine Einrichtung (2) überträgt, die ein Ziel für ein Neufestsetzen einer IP-Adresse ist.

5. IP-Adressenverteilungssystem (10) nach einem der Ansprüche 1 bis 4, wobei
die Einrichtung (2) eine Fehlfunktionsbestimmungseinheit (20b) zum Bestimmen aufweist, ob eine Fehlfunktion in einem Teil der Einrichtung (2) auftritt und zum Übertragen von Fehlfunktionsinformation an der Einrichtung (2) zu der IP-Adressenverteilungseinrichtung (1), wenn eine Fehlfunktion auftritt, und
die IP-Adressenverteilungseinrichtung (1) Bezug nimmt auf die IP-Adressenmanagementtabelle (33a) in Antwort auf das Empfangen einer Fehlfunktionsinformation von der Einrichtung (2) und zum Anzeigen, auf der Anzeige (1a), einer IP-Adresse einer Übertragungsquelle und einer Im-Zug-Installationsposition, die der IP-Adresse zugeordnet ist.

6. IP-Adressenverteilungssystem (10) nach einem der Ansprüche 1 bis 4, wobei
die Anzeige (1a) eine drahtlose Kommunikationsfunktion aufweist,
die Anzeige (1a) überträgt, an ein mobiles Endgerät (60a), einen Anzeigeinhalt durch drahtlose Kommunikation mit dem mobilen Endgerät (60a), wobei der Anzeigeinhalt ungenutzte IP-Adressen aufweist, die in Zuordnung mit den Im-Zug-Installationspositionen zugeordnet werden,
das mobile Endgerät (60a) den Anzeigeinhalt anzeigt, der von der Anzeige (1a) übertragen wurde, Eingabeinformation zum Auswählen einer IP-Adresse entsprechend einer Im-Zug-Installationsposition der anfragenden Einrichtung (2) unter den ungenutzten IP-Adressen annimmt, und die Eingabeinformation zu der Anzeige (1a) überträgt, und
die IP-Adressenverteilungseinheit (30a) annimmt, über die Anzeige (1a), die Eingabeinformation, die von dem mobilen Endgerät (60a) übertragen wurde.

7. IP-Adressenverteilungseinrichtung (1), die mit einem Kommunikationsnetzwerk (3), das in einem Zug gerichtet ist, verbunden ist, auswählt, in Antwort auf eine Anfrage von einer Einrichtung (2), die mit dem Kommunikationsnetzwerk (3) verbunden ist, eine feste IP-Adresse, die einer anfragenden Einrichtung (2) zuzuordnen ist, und die IP-Adresse zu der anfragenden Einrichtung (2) überträgt, wobei die IP-Adressenverteilungseinrichtung (1) aufweist:
eine Anzeige (1a);
eine Eingabeeinheit (32), die durch einen Nutzer betrieben wird;
einen Speicher (33) zum Speicher einer IP-Adressenmanagementtabelle (33a), in der eine IP-Adresse und eine Im-Zug-Installationsposition einer Einrichtung (2), in der die IP-Adresse genutzt werden soll, in Eins-zu-eins-Verhältnis miteinander gemanagt werden und die Informationen aufweist, ob die IP-Adresse in Benutzung oder nicht in Benutzung ist, wobei eine nicht festgelegte IP-Adresse, die einer Im-Zug-Installationsposition einer Einrichtung zugeordnet ist, zu der eine IP-Adresse festgelegt werden soll, in der IP-Adressenmanagementtabelle vorher registriert wird; und
eine IP-Adressenverteilungseinheit (30a) zur Bezugnahme auf die IP-Adressenmanagementtabelle (33a) in Antwort auf einen Empfang einer Anfrage für eine IP-Adresse von der anfragenden Einrichtung (2) anzeigen, auf der Anzeige (1a), ungenutzte IP-Adressen im Eins-zu-eins-Verhältnis mit den Im-Zug-Installationspositionen, annehmen, von der Eingabeeinheit, von Eingabeinformationen, die durch einen Nutzer, der die Eingabeeinheit betreibt, eingegeben sind und genutzt werden zum Auswählen, von unter den ungenutzten IP-Adressen, die auf der Anzeige (1a) angezeigt werden, eine IP-Adresse entsprechend einer Im-Zug-Installationsposition der anfragenden Einrichtung (2), und zum Auswählen, von der IP-Adressenmanagementtabelle (33a), einer festen IP-Adresse, die der anfragenden Einrichtung (2) zuzuordnen ist, auf Basis der Eingabeinformation.

8. IP-Adressenverteilungsverfahren, mit:
einem Schritt des Sendens, durch eine Einrichtung (2), die mit einem Kommunikationsnetzwerk (3), das in einem Zug gerichtet ist, verbunden ist, eines IP-Adressenanfragesignals zu dem Kommunikationsnetzwerk (3);
einem Schritt des Empfangens des IP-Adressenanforderungssignals durch eine IP-Adressenverteilungseinrichtung (1), die mit dem Kommunikationsnetzwerk (3) verbunden ist;
einem Schritt des Erhaltens von ungenutzten IP-Adressen durch Bezugnehmen auf eine IP-Adressenmanagementtabelle (33a) durch die IP-Adressenverteilungseinrichtung (1), wobei die IP-Adressenmanagementtabelle (33a) eine IP-Adresse und eine Im-Zug-Installationsposition einer Einrichtung (2) managt, in der die IP-Adresse genutzt werden soll, in Eins-zu-eins-Verhältnis miteinander, und Information aufweist, ob die IP-Adresse in Benutzung ist oder nicht in Benutzung ist, wobei nicht festgelegte IP-Adressen, die mit einer Im-Zug-Installationposition einer Einrichtung zugeordnet sind, zu der eine IP-Adresse festgelegt werden soll, in der IP-Adressenmanagementtabelle vorher registriert sind;
einem Schritt des Anzeigens, durch die IP-Adressenverteilungseinrichtung (1), erhaltener ungenutzter IP-Adressen im Eins-zu-eins-Verhältnis mit den Im-Zug-Installationspositionen auf einer Anzeige (1a);
einem Schritt des Annehmens, durch die IP-Adressenverteilungseinrichtung (1), von Eingabeinformation, die durch einen Nutzer eingegeben ist und dazu genutzt wird zum Auswählen, von unter den ungenutzten IP-Adressen, die auf der Anzeige eins zu eins angezeigt werden, einer IP-Adresse entsprechend einer Im-Zug-Installationsposition einer Einrichtung (2), die eine Quelle einer Anfrage für eine IP-Adresse ist; und
einem Schritt des Auswählens, von der IP-Adressenmanagementtabelle (33a), einer festen IP-Adresse, die der anfragenden Einrichtung (2) auf einer Basis einer Eingabeinformation zuzuordnen ist und übertragene IP-Adressen zu der anfragenden Einrichtung (2) durch die IP-Adressenverteilungseinrichtung (1).

## Revendications

1. Système de distribution d'adresse IP (10), comprenant :
une pluralité de dispositifs (2) connectés à un réseau de communication (3) établi dans un train ; et
un dispositif de distribution d'adresse IP (1) pour sélectionner, en réponse à une demande d'un dispositif (2), une adresse IP fixe à attribuer à un dispositif demandeur (2), et pour transmettre l'adresse IP au dispositif demandeur (2), le dispositif de distribution d'adresse IP (1) étant connecté au réseau de communication (3),
le dispositif de distribution d'adresse IP (1) comprenant :
un écran (1a) ;
une unité d'entrée (32) manipulable par un utilisateur ;
un stockage (33) pour stocker une table de gestion d'adresse IP (33a) dans laquelle une adresse IP et une position d'installation à bord du train d'un dispositif (2) où l'adresse IP doit être utilisée sont gérées en correspondance mutuelle une à une, et qui inclut une information indiquant si l'adresse IP est en cours d'utilisation ou non, une adresse IP non définie, associée à une position d'installation à bord du train d'un dispositif pour lequel une adresse IP doit être définie, étant enregistrée à l'avance dans la table de gestion d'adresse IP ; et
une unité de distribution d'adresse IP (30a) pour se référer à la table de gestion d'adresse IP (33a) en réponse à la réception d'une demande d'adresse IP en provenance du dispositif demandeur (2), pour afficher, sur l'écran (1a), des adresses IP non utilisées en correspondance une à une avec les positions d'installation à bord du train, pour accepter, à partir de l'unité d'entrée, une information d'entrée qui est entrée par un utilisateur manipulant l'unité d'entrée et qui est utilisée pour sélectionner, parmi les adresses IP non utilisées affichées sur l'écran (1a), une adresse IP correspondant à une position d'installation à bord du train du dispositif demandeur (2), et pour sélectionner, dans la table de gestion d'adresse IP (33a), une adresse IP fixe à attribuer au dispositif demandeur (2) sur la base de l'information d'entrée.

2. Système de distribution d'adresse IP (10) selon la revendication 1, dans lequel :
le dispositif (2) comprend :
une unité d'entrée (21) pour permettre une entrée externe à la suite d'une manipulation ; et
une unité de demande d'adresse IP (20a) pour envoyer un signal de demande d'adresse IP pour demander une adresse IP au réseau de communication (3) si l'unité d'entrée (21) est dans un état manipulé quand une source d'alimentation du train est allumée.

3. Système de distribution d'adresse IP (10) selon la revendication 1, dans lequel le dispositif (2) comprend une unité de demande d'adresse IP (20a) pour envoyer un signal de demande d'adresse IP pour demander une adresse IP au réseau de communication (3) si une adresse IP n'est pas encore définie pour le dispositif (2) quand une source d'alimentation du train est allumée.

4. Système de distribution d'adresse IP (10) selon la revendication 3, dans lequel :
le dispositif de distribution d'adresse IP (1) comprend une unité de génération de signal d'effacement d'adresse IP (30b) pour générer un signal d'effacement d'adresse IP pour amener un dispositif (2) auquel une adresse IP utilisée est attribuée à exécuter un processus d'effacement sur une adresse IP, et
l'unité de génération de signal d'effacement d'adresse IP (30b) transmet le signal d'effacement d'adresse IP à un dispositif (2) qui est une cible pour la réinitialisation d'une adresse IP.

5. Système de distribution d'adresse IP (10) selon l'une quelconque des revendications 1 à 4, dans lequel :
le dispositif (2) comprend une unité de détermination de dysfonctionnement (20b) pour déterminer si un dysfonctionnement se produit dans une partie du dispositif (2) et pour transmettre une information de dysfonctionnement concernant le dispositif (2) au dispositif de distribution d'adresse IP (1) quand un dysfonctionnement se produit, et
le dispositif de distribution d'adresse IP (1) se réfère à la table de gestion d'adresse IP (33a) en réponse à la réception d'une information de dysfonctionnement en provenance du dispositif (2) et affiche, sur l'écran (1a), une adresse IP d'une source de transmission et une position d'installation à bord du train associée à l'adresse IP.

6. Système de distribution d'adresse IP (10) selon l'une quelconque des revendications 1 à 4, dans lequel :
l'écran (1a) inclut une fonction de communication sans fil,
l'écran (1a) transmet, à un terminal mobile (60a), un contenu d'affichage par communication sans fil avec le terminal mobile (60a), le contenu d'affichage incluant des adresses IP non utilisées affichées en association avec les positions d'installation à bord du train,
le terminal mobile (60a) affiche le contenu d'affichage transmis par l'écran (1a), accepte une information d'entrée pour sélectionner, parmi les adresses IP non utilisées, une adresse IP correspondant à une position d'installation à bord du train du dispositif demandeur (2), et transmet l'information d'entrée à l'écran (1a), et
l'unité de distribution d'adresse IP (30a) accepte, par l'intermédiaire de l'écran (1a), l'information d'entrée transmise par le terminal mobile (60a).

7. Dispositif de distribution d'adresse IP (1), qui est connecté à un réseau de communication (3) établi dans un train, qui sélectionne, en réponse à une demande d'un dispositif (2) connecté au réseau de communication (3), une adresse IP fixe à attribuer à un dispositif demandeur (2), et qui transmet l'adresse IP au dispositif demandeur (2), le dispositif de distribution d'adresse IP (1) comprenant :
un écran (1a) ;
une unité d'entrée (32) manipulable par un utilisateur ;
un stockage (33) pour stocker une table de gestion d'adresse IP (33a) dans laquelle une adresse IP et une position d'installation à bord du train d'un dispositif (2) où l'adresse IP doit être utilisée sont gérées en correspondance mutuelle une à une, et qui inclut une information indiquant si l'adresse IP est en cours d'utilisation ou non, une adresse IP non définie, associée à une position d'installation à bord du train d'un dispositif pour lequel une adresse IP doit être définie, étant enregistrée à l'avance dans la table de gestion d'adresse IP ; et
une unité de distribution d'adresse IP (30a) pour se référer à la table de gestion d'adresse IP (33a) en réponse à la réception d'une demande d'adresse IP en provenance du dispositif demandeur (2), pour afficher, sur l'écran (1a), des adresses IP non utilisées en correspondance une à une avec les positions d'installation à bord du train, pour accepter, à partir de l'unité d'entrée, une information d'entrée qui est entrée par un utilisateur manipulant l'unité d'entrée et qui est utilisée pour sélectionner, parmi les adresses IP non utilisées affichées sur l'écran (1a), une adresse IP correspondant à une position d'installation à bord du train du dispositif demandeur (2), et pour sélectionner, dans la table de gestion d'adresse IP (33a), une adresse IP fixe à attribuer au dispositif demandeur (2) sur la base de l'information d'entrée.

8. Procédé de distribution d'adresse IP, consistant en :
une étape consistant à envoyer, par un dispositif (2) connecté à un réseau de communication (3) établi dans un train, un signal de demande d'adresse IP au réseau de communication (3) ;
une étape consistant à recevoir le signal de demande d'adresse IP par un dispositif de distribution d'adresse IP (1) connecté au réseau de communication (3) ;
une étape consistant à récupérer des adresses IP non utilisées en se référant, par le dispositif de distribution d'adresse IP (1), à une table de gestion d'adresse IP (33a), la table de gestion d'adresse IP (33a) gérant une adresse IP et une position d'installation à bord du train d'un dispositif (2) où l'adresse IP doit être utilisée en correspondance mutuelle une à une, et incluant une information indiquant si l'adresse IP est en cours d'utilisation ou non, une adresse IP non définie, associée à une position d'installation à bord du train d'un dispositif pour lequel une adresse IP doit être définie, étant enregistrée à l'avance dans la table de gestion d'adresse IP ;
une étape consistant à afficher sur un écran (1a), par le dispositif de distribution d'adresse IP (1), des adresses IP non utilisées récupérées, en correspondance une à une avec les positions d'installation à bord du train ;
une étape consistant à accepter, par le dispositif de distribution d'adresse IP (1), une information d'entrée qui est entrée par un utilisateur et qui est utilisée pour sélectionner, parmi les adresses IP non utilisées affichées sur l'écran (1a), une adresse IP correspondant à une position d'installation à bord du train d'un dispositif (2) qui est à l'origine d'une demande d'adresse IP ; et
une étape consistant à sélectionner, dans la table de gestion d'adresse IP (33a), une adresse IP fixe à attribuer au dispositif demandeur (2) sur la base de l'information d'entrée, et à transmettre l'adresse IP au dispositif demandeur (2) par le dispositif de distribution d'adresse IP (1).
